# EUROPEAN PATENT APPLICATION

(11) **EP 4 838 354 A1**
(43) Date of publication of application: **11.11.2026**
(21) Application number: 25176723.2
(22) Date of filing: 15.05.2025
(51) Int. Cl.: G06F 9/30, G06F 9/455, G06F 9/38, G06F 15/80

(54) **SCALARIZATION OF DYNAMIC INDEXING UNIFORM BUFFER OBJECT ACCESSES**

(30) Priority: 09.05.2025 US 202519203212
(71) Applicant: MEDIATEK INC., Hsinchu City 30078 (TW)
(72) Inventor: LIN, Shih-Han, 30078 Hsinchu City (TW); SONG, Litong, San Jose, 95134 (US); RAMANARAYANAN, Ramshankar, San Jose, 95134 (US); LIN, Hsin-Hsiao, San Jose, 95134 (US); WU, Yao-Ting, 30078 Hsinchu City (TW); CHEN, Chung-Shu, San Jose, 95134 (US); KOTARI, Preethi, San Jose, 95134 (US)
(74) Representative: Hoefer & Partner Patentanwälte mbB

(57) **Abstract**

A method of transforming dynamic indexing to static indexing with scalarization includes identifying a plurality of array indexes in a source code, identifying a plurality of dynamically indexed instructions associated with the plurality of array indexes, prioritizing the plurality of dynamically indexed instructions according to a priority list, removing at least one duplicate instruction from the plurality of dynamically indexed instructions, estimating an allocation size for the plurality of dynamically indexed instructions according to the priority list, transforming a set of dynamically indexed instructions to a set of statically indexed instructions including static indexes without dynamic indexes, and allocating the set of statically indexed instructions to the uniform memory. Each dynamically indexed instruction loads from a uniform memory.

## Description

### Field of the Invention

The present invention relates generally to graphics processing unit (GPU) optimization techniques, and more particularly to a method and system for improving shader performance by transforming dynamic indexing operations to static indexing operations in uniform buffer object (UBO) and constant buffer (CB) accesses.

### Background of the Invention

A graphics processing unit, or GPU, is a specialized electronic circuit designed to accelerate the creation of images and video on a computer. It is essentially a co-processor to the main central processing unit (CPU), handling the heavy lifting of graphical tasks while the CPU takes care of other processes. GPU helps to improve performance and graphics quality by offloading some graphical processing from the CPU. Meanwhile, the GPU is so important mainly because it makes games run more efficiently and makes them look better with higher resolution graphics and improved frame rates. More particularly, GPU can render 2D and 3D graphics, animations, and video, enhance visual effects in games, movies, and other applications, power applications like image editing, video editing, and 3D modeling. GPU can also be used for non-graphical tasks like machine learning and scientific computing due to their parallel processing capabilities.

GPUs are designed for parallel processing, meaning they can handle many smaller tasks simultaneously, which makes GPUs much faster than CPUs at processing large amounts of graphical data. A GPU has its own dedicated memory. The CPU sends instructions and data to the GPU, and the GPU carries out those instructions and sends the results back to the CPU.

A shader is a piece of code or program that is executed on the GPU to manipulate an image before it is drawn to the screen. Shaders calculate the appropriate levels of light, darkness, and color during the rendering of a 3D scene. This process is known as shading. Shaders have evolved to perform a variety of specialized functions in computer graphics, special effects, and video post-processing, as well as general-purpose computing on GPU. Thus, the speed of shader execution or shader performance is crucial to GPU.

Memory access instructions play an important role in shader performance. Constant buffer (CB) and uniform buffer object (UBO) are commonly used memory by shaders. The efficiency of handling CB and UBO accesses by shaders plays a crucial role in rendering graphics.

Shader programs frequently utilize dynamic indexing of uniform buffers to access data structures such as arrays and matrices. Dynamic indexing occurs when the index used to access an array element is determined at runtime rather than compile time. This programming pattern offers flexibility and code conciseness, particularly when implementing algorithms that must access different array elements based on runtime conditions. However, this flexibility comes at a significant performance cost on many GPU architectures, as dynamic indexing typically requires loading data from global memory rather than from faster, more power-efficient constant registers. Dynamic indexing of uniform buffers presents significant challenges for GPU shader performance optimization. When shaders access uniform buffer or constant buffer elements using variable indices instead of constant indices, many GPU architectures cannot directly map these accesses to their fast constant register files. This limitation arises because constant registers are typically addressed using static indices in hardware instruction set architectures (ISAs), with limited or no support for dynamic addressing. Consequently, GPU compilers must generate code that performs runtime memory loads from global memory for each dynamically indexed access, resulting in substantially higher latency, increased power consumption, and reduced shader performance. This performance gap becomes particularly problematic in complex graphics applications where dynamically indexed uniform buffer accesses are common, such as in material systems that iterate through arrays of light sources or scene parameters.

Current GPU architectures employ various approaches to mitigate the performance impact of dynamic indexing, but these approaches have notable limitations. Some architectures support hardware-based address registers that can dynamically index into constant registers, but these often require complex locking mechanisms when multiple threads (or warps) attempt to use different index values concurrently, potentially causing serialization and performance degradation. Other implementations may cache frequently accessed uniform data, but cache misses still result in high-latency memory accesses. Some compilers attempt to unroll loops containing dynamic indexes when the index range is small and known at compile time, but this approach has limited applicability and may significantly increase code size. These limitations highlight the need for a more efficient method to handle dynamic indexing of uniform buffers in shader programs, particularly as modern graphics applications continue to increase in complexity and performance requirements.

### Summary of the Invention

The invention is set out in the appended set of claims.

### Brief Description of the Drawings

FIG. 1 illustrates an example of transforming an instruction having dynamic index with sequential selection instructions with static indexes.
FIG. 2 illustrates an embodiment of a transformation for a section of code from a shader.
FIG. 3 is a flowchart of a method of transforming dynamic indexing to static indexing.
FIG. 4 illustrates an exemplary process of dynamic indexing to static indexing transformation using the method of FIG. 3 for a single dimension scalar array.
FIG. 5 illustrates an exemplary process of dynamic indexing to static indexing transformation using the method of FIG. 3 for a multi-dimension scalar array.
FIG. 6 illustrates an exemplary process of dynamic indexing to static indexing transformation using the method of FIG. 3 for a multi-dimension struct array.
FIG. 7 is a flowchart of a method for identifying dynamically indexed instructions in the method of FIG. 3.
FIG. 8 is a flowchart of a method for finding the dynamic index of an offset described in the method of FIG. 7.
FIG. 9 illustrates a flowchart of a method for calculating the base offset of the dynamic index according to an embodiment.
FIG. 10 illustrates a flowchart of a method of an allocation process to estimate allocation budget and allocate constant registers according to an embodiment.
FIG. 11 illustrates a flowchart of a method for getting transformable candidates instruction in the method of FIG. 10.
FIG. 12 is a flowchart of a method of transforming dynamic indexing to static indexing according to an embodiment.

### Detailed Description

The present disclosure is aimed to address the above-described issues with a detailed description of various embodiments. While specific implementation details are presented herein to facilitate a comprehensive understanding of the disclosure, it will be apparent to those skilled in the art that the present invention may be realized without necessarily adhering to all such particularities. In certain instances, well-established methods, procedures, components, and circuits have been omitted from exhaustive description to avoid obscuring the present disclosure. It should be understood that technical features individually described in relation to a single drawing may be implemented either discretely or in combination with other features, as set forth in the present specification.

For terms and techniques not specifically described, reference may be made to technical standard documents (e.g., OpenGL specifications, OpenCL developer guides) issued before this specification.

It should be understood that this disclosure is described primarily in the context of graphic shader object, but it can be implemented in other workload such as compute kernels, artificial intelligence (AI) kernels in both training and inference, and other workloads that can be executed on a GPU as well.

A uniform buffer may refer to a special region of memory on the GPU that holds a collection of uniform data accessible by multiple shaders. Similarly, a constant buffer (CB) may refer to a special region of memory on the GPU that stores a collection of constant values used by shader. A uniform buffer object (UBO) is a type of buffer object in OpenGL that allows you to store data that is uniform across multiple shader invocations in the same drawcall. A uniform buffer object can be bound to a specific binding point and then accessed by any shader stage that has a uniform block with the same binding point. A uniform buffer object can improve the performance and efficiency of a rendering pipeline, as it reduces the number of uniform updates and state changes required per draw call.

It should be noted that the term "uniform buffer" used in this specification may include uniform memory, constant memory, constant buffer, uniform register, constant register and the equivalent according to the context. These terms may sometimes be used interchangeably in this specification, as those skilled in the art will readily understand the meaning of these terms within the context. Likely, the term "instruction" and "expression" describing the content of coding sometimes may be used interchangeably in this specification.

Memory access instructions play an important role in shader performance. To reduce the memory access overhead from accessing those commonly used UBO/CB variables, most GPUs implement a special memory, called constant register, to accommodate such variables. The particular memory might have a very fast access speed and a smaller size, and usually can be accessed similar to general purpose register file in GPU Instruction Set Architecture (ISA). It should be noted that a constant register file is a collection of constant registers. The shader program can access data from these constant registers during its execution. The constant registers not only contain constant values but can also be used to store uniform values. Uniform values act as constant values for the duration of a drawcall. However, a uniform value is not necessarily the same for different drawcalls. Uniform values might not be determined at the compilation time, and it requires code to load the values from the GPU buffer to process the necessary calculation. An optimized GPU compiler can analyze the shader code and find the suitable candidate variables and their associated instructions, and then moves the variables and related instructions to a particular code section called "Pilot Shader." The rest of the original shader is called "Main Shader."

The generated Pilot Shader will be executed before the Main Shader, storing the required constant and uniform values in a designated memory. The GPU driver is responsible for moving the constant and uniform values in the designated memory to the constant register before launching the Main Shader. Such process is to PRELOAD constant and/or uniform register. The Pilot Shader is only executed once in this process, but the main shader could be performed several times depending on the resolution of the screen, vertices of objects, or numbers of the work items. The PRELOAD mechanism is beneficial because those uniform memory loads occur only once in the Pilot Shader, but the values in the constant registers are used thousands of times in the Main Shader after the driver preloaded them into uniform memory. Thus, it speeds up performance, saves memory bandwidth, and reduces power consumption.

A CB and/or UBO is dynamically indexed when the shader code accesses the buffer elements using a variable index, rather than a constant index. In the case that a CB and/or UBO is dynamically indexed (e.g., CB[i]) within a shader, if the hardware (HW) and/or ISA does not support address register, constant registers cannot be accessed directly using the index [i]. In this case, GPU compiler has to introduce a memory load for the dynamic indexing access. For instance, the following dynamic indexing to CB (CB[i]) will end up with a memory load instruction in hardware code:

```
 //uniform float CB[4];
```

$T = CB \left[i\right] ;$ which is equivalent to: $T = LOAD CB_base , offset _ i$

The global memory load instructions are not only expensive for both performance and power consumption but also consume general purpose registers (GPRs), which may lead to more memory accesses like spills and fills. Therefore, optimizing memory access instructions is often necessary for GPU hardware and software optimization.

To mitigate the overhead of CB and/or UBO loads within shaders, some have introduced address registers to provide the capability of addressing constant registers which could accommodate preloaded data of CB and/or UBO before shader execution. However, the address register is shared across warps so that locking and/or unlocking warp mechanism becomes necessary within the period between the definition of address register and its last usage, especially in the case that the address register data is divergent. Due to the constraint, even address registers might not mitigate the overhead of dynamically indexed CB and/or UBO in some cases.

An approach is introduced in this specification which could significantly mitigate the overhead and problem caused by the dynamically indexed CB and/or UBO accesses. This approach could eliminate dynamic indexing to CB and/or UBO so that preloading CB and/or UBO to constant registers becomes possible regardless of the index being uniform or divergent.

The essential idea is that when the CB and/or UBO size on the indexed dimension is relatively small, a switch statement can be logically leveraged to enumerate each case of the index such that the dynamic index associated with the CB and/or UBO is replaced with static indexes. Then, the instruction having a dynamic index can be replaced with sequential selection instructions.

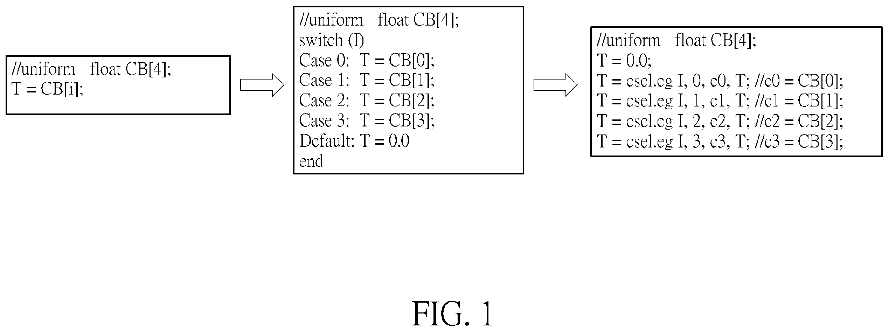

FIG. 1 illustrates an example of transforming an instruction having a dynamic index with sequential selection instructions with static indexes. The dynamically indexed instruction:

```
//uniform float CB[4];
```

$T = CB \left[i\right] ;$ can be eventually transformed to the following sequential selection instructions: $T = 0.0 ;$ $T = csel . eg I , 0 , c 0 , T ; / / c 0 = CB \left[0\right] ;$ $T = csel . eg I , 1 , c 1 , T ; / / c 1 = CB \left[1\right] ;$ $T = csel . eg I , 2 , c 2 , T ; / / c 2 = CB \left[2\right] ;$ $T = csel . eg I , 3 , c 3 , T ; / / c 3 = CB \left[3\right] ;$

c0, c1, c2, c3 are constant registers which store preloaded CB[0] , CB[1], CB[2], CB [3]. The semantics of instruction "csel . eg arg0, arg1, arg2, arg3" returns arg2 or arg3 based on arg0==arg1 or arg0! =arg1. With this transformation, dynamically indexed CB and/or UBO load instructions can be replaced by statically indexed load instructions, thereby making it possible to preload CB and/or UBO and access constant register directly in Main Shader. Thus, the global memory loads from CB and/or UBO would not need to be executed within each shader warp. Instead, they can be preloaded into constant registers once (with a specific warp or hardware) before thousands of warp executions by the Main Shader. Essentially, the transformation may eliminate global memory loads by introducing more Arithmetic Logic Unit (ALU) instructions within Main Shader.

The penalties of introducing a series of sequential selection instructions include (1) typically a few more cycles within instruction pipeline; (2) more instructions within Main Shader. However, compared with the processing time of a global memory load instruction, these penalties are typically trivial and negligible.

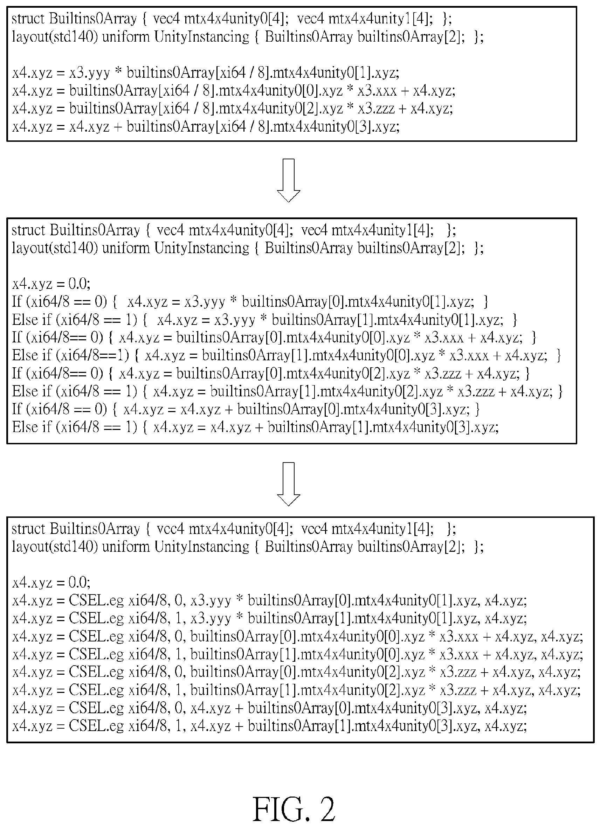

FIG. 2 illustrates an embodiment of a transformation for a section of code from a shader. This piece of code is a snippet from a real game on the market and similar patterns widely occur in many shaders. In this illustration, the total size of the UBO should be 2 × (4×4×4+4×4×4) = 256 bytes. However, the dynamic indexing only applies to outer dimension whose size is 2, so that only two selection instructions for each dynamically indexed access here are needed with this transformation. In OpenGL for Embedded Systems (OpenGL ES) and Vulkan shaders, UBO type array of structure is very typical. Therefore transformation can be widely applicable and brings significant performance boost. The instruction having dynamic indexes shown in FIG. 2 can be transformed into sequential selection instructions with static indexes. After the transformation, because there are no more dynamically indexed instructions in the code, the UBO and/or CB memory accesses can be preloaded to constant registers which can be used directly in the shaders.

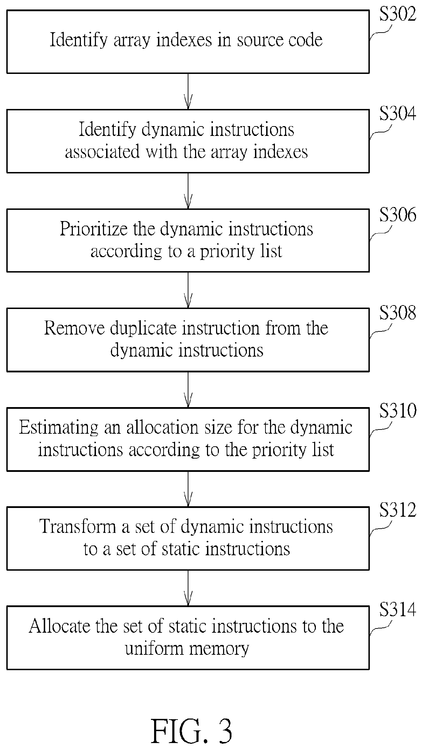

FIG. 3 is a flowchart of a method 300 of transforming dynamic indexing to static indexing according to an embodiment. The method 300 includes the following steps performed by a GPU complier:

| | |
|---|---|
| S302: | Identify array indexes in a source code; |
| S304: | Identify dynamically indexed instructions associated with the array indexes; |
| S306: | Prioritize the dynamically indexed instructions according to a priority list; |
| S308: | Remove duplicate instructions from the dynamically indexed instructions; |
| S310: | Estimate an allocation size for the dynamically indexed instructions according to the priority list; |
| S312: | Transform a set of dynamically indexed instructions to a set of statically indexed instructions; and |
| S314: | Allocate the set of statically indexed instructions to the uniform memory. |

At the beginning before identifying array indexes, the complier may parse source code. At the end after allocating the statically indexed instructions, the complier may generate assembly code and/or object code. Each dynamically indexed instruction loads from a uniform memory. The set of statically indexed instructions has only static indexes without dynamic indexes.

In the compiler front-end (step S304), it can identify the indexing expression from the input shader. An example is shown in the following code written in OpenGL Shading Language (GSGL) and Standard Portable Intermediate Representation (SPIR-V):
GSGL: $t 10 \left[int\left(u 12\right)\right] . BgdMinIntersectableCoc = 16384.0 ;$
SPIR-V: $% 77 = OpLoad %uint %u 12$ $% 78 = OpBitcast %int % 77$ %80 = OpAccessChain %_ptr_Function_float %t10 %78 %int_2 OpStore %80 %float_16384

The number of elements in the array (i.e., domain) and the size of each element (i.e., stride) can be retrieved from analyzing the definition in the source code. The non-constant index instructions with domain and stride information can be annotated by the complier.

In the compiler middle-end (step S306), it can analyze to locate the targeting uniform and/or constant load instructions. The qualified uniform and/or constant load instructions can be a load from a uniform (or constant) memory.

When a qualified load instruction is located, the complier can traverse its address operand to calculate the distance from the base address of uniform and/or constant buffer (i.e., offset). The domain, stride, and offset information with the qualified load expression can be annotated.

Multiple values can be preloaded into constant registers from a single dynamic indexing uniform (or constant) load instruction. Hence, the priority for constant register allocation is essential. The primary purpose of the method 300 is to increase the utilization of constant registers and remove memory loads without affecting the existing beneficial allocation. Hence, these instructions are candidate instructions and a priority list can be formed for all these candidate instructions. An example of the priority list listing the candidate instructions from high priority to low priority is described below:
1. The candidate instruction is composed of multiple expensive uniform/constant memory loads;
2. The candidate instruction is composed of high latency operations (e.g., log, square root, etc.);
3. The candidate instruction can be transformed from a dynamic index into several static indexes by the method described in this patent;
4. The candidate instruction is composed of multiple low latency operations;
5. The candidate instruction is an immediate value.

The different uniform (or constant) load instructions may point to the same object and value. In such case, it may be imperative to recognize the duplication by comparing the domain, stride, offset, and base address of UBO and/or CB in memory and remove them in the following estimation process (steps S308 and S310).

A two-pass allocation process is implemented to estimate the constant register allocation budget. In an exemplary embodiment, during the first pass, the allocation size can be calculated for candidate instructions from priorities 1 and 2 of the priority list. A budget size in the uniform memory for this transformation can be derived according to the total constant register size and the allocated size. The transformation can be controlled not to exceed the budget size to ensure additional uniform and/or constant loads would not be created. Then during the second pass, accurate allocation can be performed for all qualified candidate instructions.

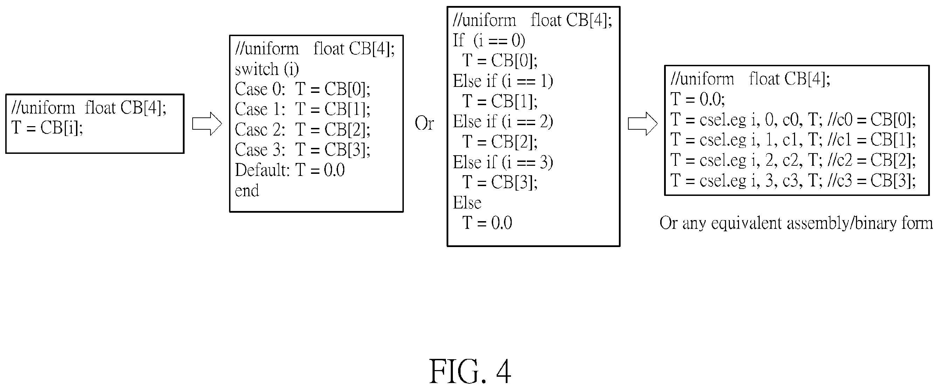

FIG. 4 illustrates an exemplary process of dynamic indexing to static indexing transformation using the method 300 for a single dimension scalar array. This illustration demonstrates the step-by-step transformation process from source code containing dynamically indexed instructions to statically indexed instructions that can be efficiently preloaded into constant registers. The transformation is particularly beneficial for shader performance optimization on GPUs.

The transformation process begins with the compiler analyzing the source code to identify array indexes and dynamically indexed instructions that load from uniform memory. For the single dimension scalar array scenario depicted in FIG. 4, the dynamic index applies to a one-dimensional array of scalar values. The compiler identifies the dynamic index component (variable 'i' in this case) and calculates the base offset of the index, while also determining the number of elements in the array (domain) and the size of each element (stride) from the source code definition.

Once the analysis is complete, the compiler transforms the dynamically indexed instruction (e.g., T = CB[i]) into a sequence of statically indexed selection instructions. This transformation starts with setting an initial value (e.g., T = 0.0), followed by a series of conditional selection instructions for each possible index value within the domain. For example, T = csel.eg I, 0, c0, T means if I equals 0, select c0, otherwise keep T; similarly, T = csel.eg I, 1, c1, T means if I equals 1, select c1, otherwise keep T, and so on for each element in the array.

This transformation strategy effectively eliminates dynamic indexing by replacing global memory loads with a series of arithmetic logic operations that access preloaded constant registers. The values from each statically indexed position (c0, c1, c2, etc.) can now be preloaded into constant registers before shader execution, which significantly improves access speed. While this approach introduces more instructions in the Main Shader, it substantially reduces the performance and power consumption penalties associated with global memory access operations.

The process illustrated in FIG. 4 represents one of the simpler transformation scenarios focusing on a scalar array case. Nevertheless, it effectively demonstrates how the transformation maintains the original semantic behavior of the code while optimizing its execution performance on GPU hardware. This optimization is particularly valuable for shader programs where uniform buffer access efficiency directly impacts rendering performance and power consumption. This illustration is an example to show the working process of the method 300, and thus the source code and the intermediate expression are not limited thereto.

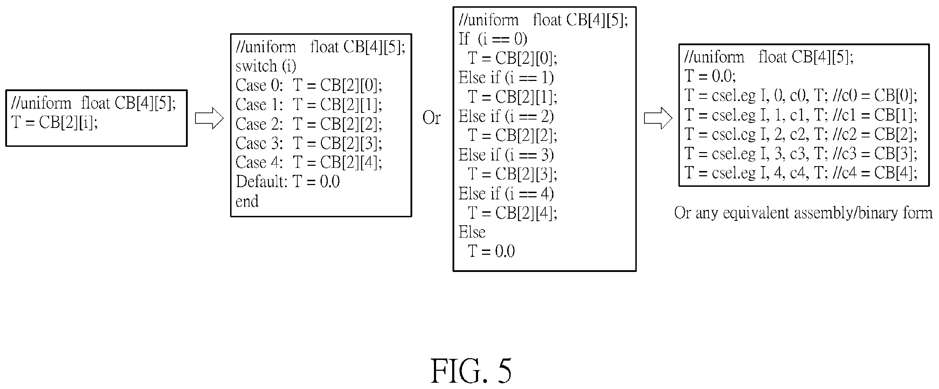

FIG. 5 illustrates an exemplary process of dynamic indexing to static indexing transformation using the method 300 for a multi-dimension scalar array. This example extends the transformation concept beyond the single-dimension case shown in FIG. 4 to demonstrate how the method handles more complex data structures commonly used in shader programming, particularly those with multiple array dimensions.

In the multi-dimension scalar array transformation depicted in FIG. 5, the key is that only the values in the dimension with dynamic index (e.g., [i]) need to be preloaded to the constant register. The method identifies which dimension contains the dynamic index and focuses the transformation efforts specifically on that dimension, without needing to preload the entire multi-dimensional array. This targeted approach conserves valuable constant register space while still eliminating the performance penalties associated with dynamic indexing.

The transformation process begins with the compiler analyzing the source code to identify multi-dimensional array accesses with dynamic indexes. For example, in an expression like CB[i] [1] where the first dimension uses a dynamic index i while the second dimension uses a static index 1, the compiler recognizes that only the first dimension requires transformation. Similarly, in an expression like CB[2] [j] where the second dimension uses a dynamic index j, the compiler identifies that the transformation should focus on the second dimension.

Once the compiler has identified the dimension containing the dynamic index, it extracts information about the array's structure, including the domain (number of elements) in the dynamic dimension and the stride (size of each element). The compiler then transforms the dynamically indexed instruction into a sequence of statically indexed selection instructions, similar to the single-dimension case but applied only to the dimension containing the dynamic index.

This dimension-specific transformation is particularly efficient for complex data structures commonly found in graphics shaders. By selectively transforming only the dimension with dynamic indexing while preserving static indexing in other dimensions, the method achieves an optimal balance between performance improvement and constant register utilization. The transformation maintains all the semantic behaviors of the original code while enabling the GPU to access the data more efficiently through preloaded constant registers rather than expensive global memory loads. This illustration is an example to show the working process of the method 300, and thus the source code and the intermediate expression are not limited thereto.

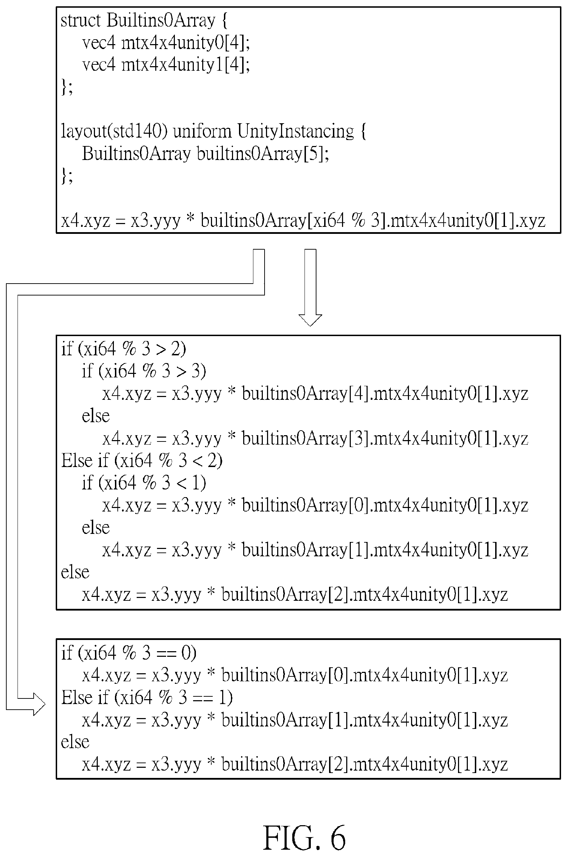

FIG. 6 illustrates an exemplary process of dynamic indexing to static indexing transformation using the method 300 for a multi-dimension struct array. This example demonstrates a more complex transformation scenario addressed by the method, where the dynamic indexing applies to arrays of structures containing multiple fields and potentially nested arrays, representing an advanced use case commonly found in sophisticated shader programs.

In the multi-dimension struct array transformation depicted in FIG. 6, the method showcases its ability to handle complex data structures like the example struct array (e.g., struct Builtins0Array) with dynamic indexing. What distinguishes this transformation from those shown in FIG. 4 and FIG. 5 is that the transformed instructions need not be limited to sequential comparison instructions but can leverage any appropriate search algorithm based on the specific characteristics of the struct array.

According to the above descriptions, the method 300 depicted in this specification can cover more generic cases. The method 300 can handle not only nested aggregate data typed CB arrays but also multi-dimension dynamically indexed CB arrays. In other word, it does not necessarily require expanding the entire array. Instead, the method can expand the array according to the value range of the array index, resulting in more concise transformed instructions. For instance, the method can handle CB[i] [1] (1st dimension dynamically indexed) and CB[2][j] (2nd dimension dynamically indexed) occurring in the same shader simultaneously. This optimization is especially valuable when dealing with large struct arrays where the dynamic index is known to access only a subset of the available elements. By limiting the transformation to the relevant subset of the array, the method reduces both the code size and execution overhead.

The transformation process can begin with the compiler analyzing the source code to identify struct array accesses with dynamic indexes, such as A[i].B[2] or A [1].B[j] where A is a structure containing a nested array B. The compiler examines the structure definition (for example, struct A { ..., vec4 B[3], ... }) to understand the memory layout, field offsets, and array dimensions. Based on this analysis, the compiler determines which fields within the struct are affected by the dynamic index and calculates the appropriate base offsets and strides for the transformation.

When transforming access to struct arrays, the method can handle not only the direct indexing of the array itself but also the subsequent field accesses within the struct. This needs careful tracking of offsets and memory layouts to ensure that the transformed static instructions correctly access the same memory locations as the original dynamic indexing. The compiler generates appropriate selection instructions that maintain the semantics of the original code while eliminating the performance overhead of dynamic indexing.

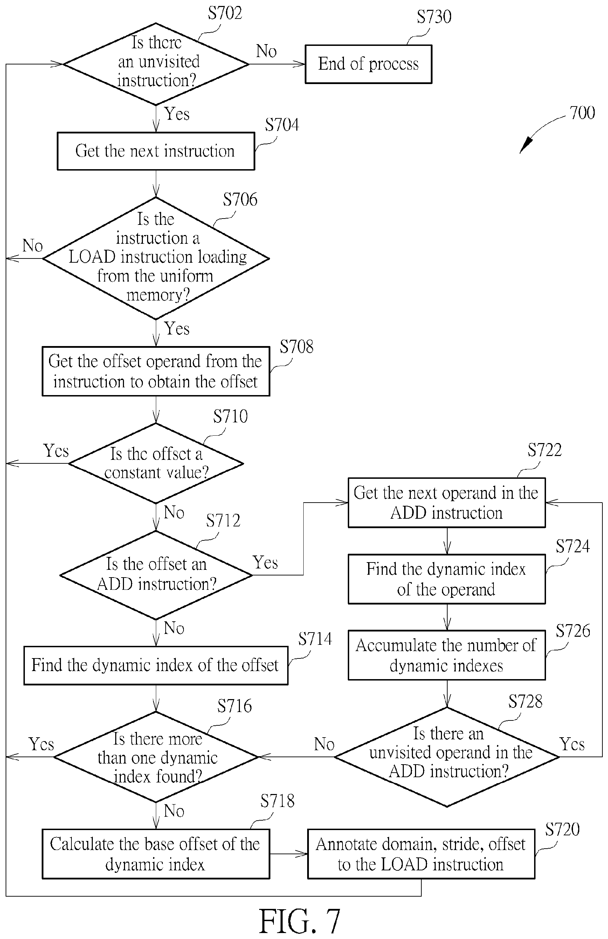

FIG. 7 illustrates a flowchart of a method 700 according to an embodiment for identifying dynamically indexed instructions in the method 300. The method 700 includes the following steps:

| | |
|---|---|
| S702: | Determine if there is a unvisited instruction? If so, proceed to S704; if not, proceed to S730; |
| S704: | Get the next instruction; |
| S706: | Determine if the instruction is a LOAD instruction loading from a uniform memory? If so, proceed to S708; if not, go back to S702; |
| S708: | Get the offset operand from the instruction to obtain the offset; |
| S710: | Determine if the offset is a constant value? If so, go back to S702; if not, proceed to S712; |
| S712: | Determine if the offset is an ADD instruction? If so, proceed to S722; if not, proceed to S714; |
| S714: | Find the dynamic index of the offset; |
| S716: | Determine if there is more than one dynamic index found? If so, go back to S702; if not, proceed to S718; |
| S718: | Calculate the base offset of the dynamic index; |
| S720: | Annotate domain, stride, offset to the LOAD instruction, and then go back to S702; |
| S722: | Get the next operand in the ADD instruction; |
| S724: | Find the dynamic index of the operand; |
| S726: | Accumulate the number of dynamic indexes; |
| S728: | Determine if there is an unvisited operand in the ADD instruction? If so, go back to S722; if not, go back to S716; |
| S730: | End of process. |

The method 700 begins by iteratively examining each instruction in the code to determine if it's a LOAD instruction loading from uniform memory. For each such instruction, the method examines its offset operand to determine if it contains a dynamic index. If the offset is a constant value, the instruction is skipped; if not, the method analyzes whether the offset is an ADD instruction or another type of operation. For ADD instructions, the method examines each operand of the ADD instruction recursively to find dynamic indexes, accumulating the total number of dynamic indexes found. For non-ADD instructions, the method directly searches for the dynamic index. If exactly one dynamic index is found, the method calculates the base offset of the dynamic index and annotates the LOAD instruction with domain, stride, and offset information, marking it as a candidate for transformation. Instructions with multiple dynamic indexes are excluded from transformation. This systematic approach efficiently identifies all qualified dynamically indexed instructions in the shader code while filtering out instructions that cannot be effectively transformed using the dynamic-to-static indexing method.

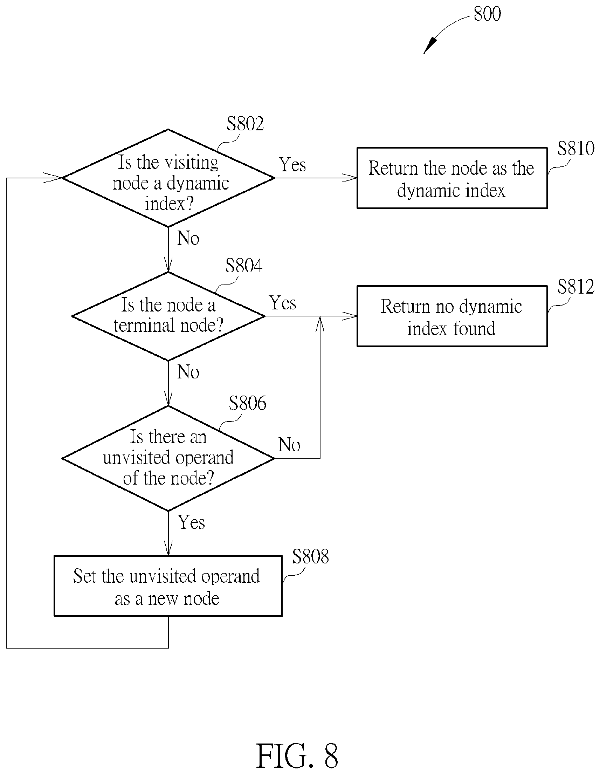

FIG. 8 illustrates a flowchart of a method 800 according to an embodiment for finding the dynamic index of an offset described in the method 700. The method 800 includes the following steps:

| | |
|---|---|
| S802: | Determine if the visiting node is a dynamic index? If so, proceed to S810; if not, proceed to S804; |
| S804: | Determine if the node is a terminal node? If so, proceed to S812; if not, proceed to S806; |
| S806: | Determine if there is an unvisited operand of the node? If so, proceed to S808; if not, proceed to S812; |
| S808: | Set the unvisited operand as a new node, then go back to S802; |
| S810: | Return the node as the dynamic index, then end process; |
| S812: | Return no dynamic index found, then end process. |

This method 800 employs a depth-first traversal approach to analyze the operand tree of the instructions. The process begins by examining the current visiting node to determine if it is a dynamic index. If it is, the method immediately returns this node as the dynamic index and concludes the process. If not, the method checks if the node is a terminal node (one with no further operands to examine). When encountering a non-terminal, non-dynamic index node, the method recursively examines each unvisited operand of the node, treating each one as a new node for inspection. This recursive descent continues until either a dynamic index is found or all paths are exhausted without finding a dynamic index. In the latter case, the method returns that no dynamic index was found. This targeted search algorithm efficiently navigates complex instruction operand trees to precisely identify dynamic indexes that would benefit from the transformation process, while avoiding unnecessary processing of instructions that cannot be optimized using this technique.

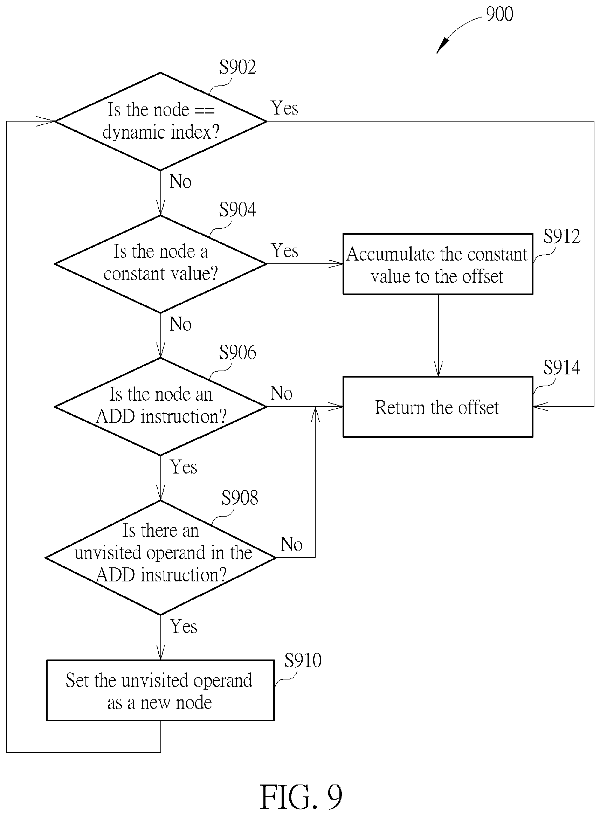

FIG. 9 illustrates a flowchart of a method 900 for calculating the base offset of the dynamic index according to an embodiment. The method 900 can be applied to UBO and CB objects. The method 900 includes the following steps:

| | |
|---|---|
| S902: | Determine if the node is a dynamic index? If so, proceed to S914; if not, proceed to S904; |
| S904: | Determine if the node is a constant value? If so, proceed to S912; if not, proceed to S906; |
| S906: | Determine if the node is an ADD instruction? If so, proceed to S908; if not, proceed to S914; |
| S908: | Determine if there is an unvisited operand in the ADD instruction? If so, proceed to S910; if not, proceed to S914; |
| S910: | Set the unvisited operand as a new node, then go back to S902; |
| S912: | Accumulate the constant value to the offset; |
| S914: | Return the offset. |

The method 900 can determine how much of an offset calculation is constant versus dynamic, enabling proper transformation of dynamically indexed instructions. The process begins by examining the current node to determine if it is a dynamic index. If it is, the method immediately returns the accumulated offset value, as no further constant components can be added. If the node is not a dynamic index, the method checks if it represents a constant value. When a constant value is found, it is accumulated into the running offset total. For ADD instructions, the method recursively examines each unvisited operand, treating each one as a new node to extract any constant components that can be separated from the dynamic index. If the node is neither a dynamic index, constant value, nor ADD instruction, the method terminates and returns the accumulated offset. This careful parsing of offset expressions allows the compiler to separate constant and variable components of address calculations, which is essential for accurately transforming dynamically indexed instructions into their statically indexed equivalents while preserving the original program semantics.

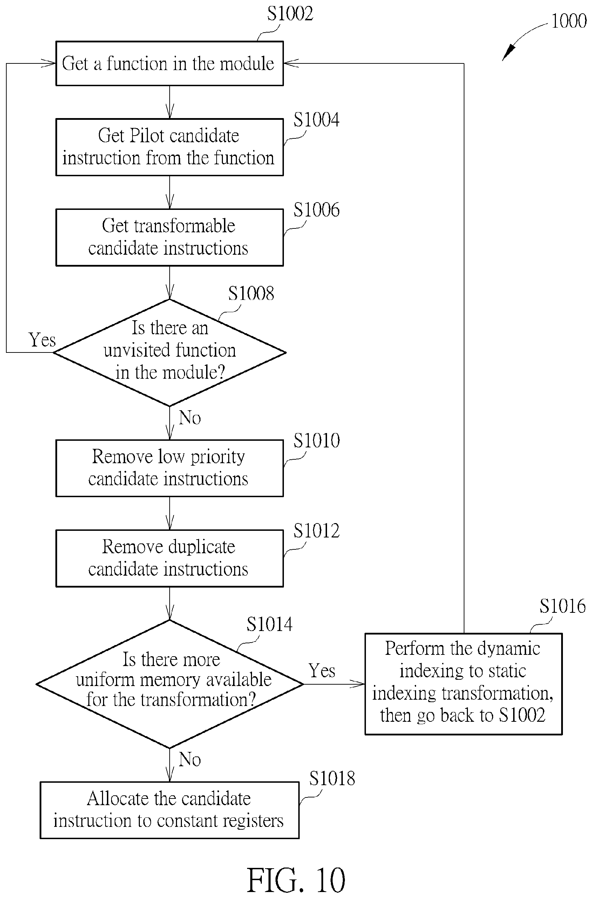

FIG. 10 illustrates a flowchart of a method 1000 of an allocation process to estimate allocation budget and allocate constant registers according to an embodiment. This method is according to the previously described two-pass allocation process. The method 1000 includes the following steps:

| | |
|---|---|
| S1002: | Get a function in the module; |
| S1004: | Get Pilot candidate instruction from the function; |
| S1006: | Get transformable candidate instructions; |
| S1008: | Determine if there is an unvisited function in the module? If so, go back to S1002; if not, proceed to S1010; |
| S1010: | Remove low priority candidate instructions; |
| S1012: | Remove duplicate candidate instructions; |
| S1014: | Determine if there is still uniform memory available for the dynamic indexing to static indexing transformation? If so, proceed to S1016; if not, proceed to S1018; |
| S1016: | Perform the dynamic indexing to static indexing transformation, then go back to S1002; |
| S1018: | Allocate the candidate instruction to constant registers. |

The method 1000 systematically processes each function in the module, first identifying Pilot candidate instructions, then gathering transformable candidate instructions through a dedicated sub-process. After examining all functions, the method removes low-priority candidate instructions and eliminates duplicates to optimize resource utilization. A critical decision point then evaluates whether sufficient uniform memory remains available for dynamic-to-static indexing transformation. If adequate memory exists, the method performs the transformation and cycles back to reprocess additional functions; otherwise, it proceeds directly to allocate the remaining candidate instructions to constant registers. This methodical two-pass approach ensures optimal utilization of limited constant register resources by first prioritizing high-value transformations while maintaining enough space for essential allocations, effectively balancing the competing demands of performance optimization and resource constraints in the GPU shader compilation process.

Please note that candidate instructions are LOAD instructions from the module selected to be candidates for the transformation. The dynamic indexing to static indexing transformation has been described previously and will not be repeated here.

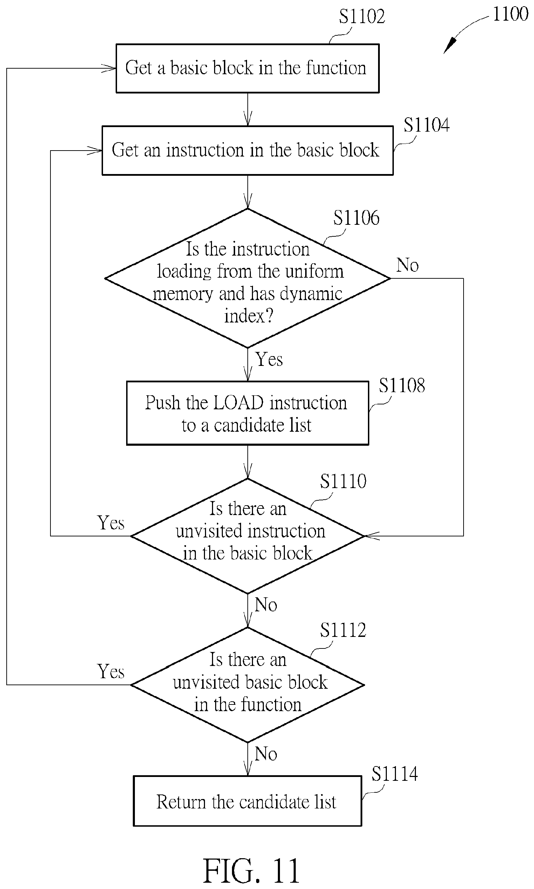

FIG. 11 illustrates a flowchart of a method 1100 for getting transformable candidates instruction in the method 1000 according to an embodiment. The method 1100 includes the following steps:

| | |
|---|---|
| S1102: | Get a basic block in the function; |
| S1104: | Get an instruction in the basic block; |
| S1106: | Determine if the instruction is a LOAD instruction loading from the uniform memory and has dynamic index? If so, proceed to S1108; if not go to S1110; |
| S1108: | Push the LOAD instruction to a candidate list; |
| S1110: | Determine if there is an unvisited instruction in the basic block; if so, go back to S1104; if not, proceed to S1112; |
| S1112: | Determine if there is an unvisited basic block in the function; if so, go back to S1102; if not, proceed to S1114; |
| S1114: | Return the candidate list. |

The method 1100 implements a nested iteration strategy, first examining each basic block within a function, then systematically inspecting each instruction within those basic blocks. For each instruction, the method applies a critical filter: it checks whether the instruction is a LOAD instruction from uniform memory that contains a dynamic index. Instructions meeting these criteria are added to a candidate list for potential transformation. After exhaustively examining all instructions in all basic blocks of the function, the method returns the complete candidate list. This focused selection process efficiently identifies precisely those instructions that stand to benefit from the dynamic-to-static indexing transformation, forming the foundation for the subsequent prioritization, deduplication, and transformation steps in the overall optimization pipeline.

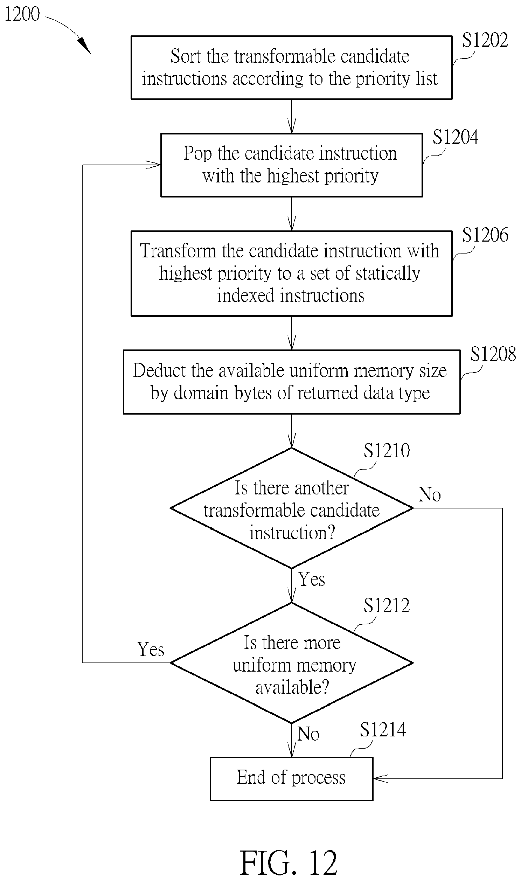

FIG. 12 is a flowchart of a method 1200 of transforming dynamic indexing to static indexing according to an embodiment. The method 1200 includes the following steps:

| | |
|---|---|
| S1202: | Sort the transformable candidate instructions (i.e., a dynamically indexed instruction) according to the priority list; |
| S1204: | Pop the candidate instruction with the highest priority; |
| S1206: | Transform the candidate instruction with highest priority to a set of statically indexed instructions; |
| S1208: | Deduct the available uniform (or constant) memory size by domain bytes of returned data type; |
| S1210: | Determine if there is another transformable candidate instruction? If so proceed to S1212; if not, go to S1214; |
| S1212: | Determine if there is more uniform memory available? If so, go to S1204; if not, go to S1214; |
| S1214: | End of process. |

The method 1200 begins by sorting all transformable candidate instructions according to the established priority list, ensuring the most beneficial transformations are processed first. It then iteratively selects the highest-priority candidate instruction and transforms it into a set of statically indexed instructions. After each transformation, the method deducts the memory space consumed by this transformation from the available uniform memory budget, maintaining accurate resource tracking. The process then evaluates two critical conditions: whether another transformable candidate instruction exists, and whether sufficient uniform memory remains available. If both conditions are satisfied, the method continues with the next highest-priority transformation; otherwise, it terminates the process. This prioritized, resource-aware transformation approach maximizes the performance benefits gained through transforming dynamic indexing while respecting the hardware constraints of limited uniform memory, ensuring optimal shader performance within the available resources.

This disclosure presents a method for transforming dynamic indexing to static indexing in uniform buffer object (UBO) and constant buffer (CB) accesses for graphics processing units (GPUs). The invention addresses a critical performance bottleneck in shader execution by eliminating the need for expensive global memory loads when accessing dynamically indexed uniform buffers.

The fundamental breakthrough centers on transforming instructions with dynamic indexes (e.g., CB [i]) into equivalent sequences of statically indexed instructions that can be efficiently preloaded into constant registers. This transformation enables the GPU to access the data through fast constant registers rather than performing costly memory accesses during shader execution, significantly improving performance and reducing power consumption.

The disclosure details a comprehensive method that identifies dynamically indexed instructions in shader code, prioritizes them based on their computational cost and complexity, eliminates duplicates, estimates allocation requirements, and transforms qualified instructions into their static equivalents. The method is implemented through a series of systematic processes illustrated in twelve figures, covering everything from initial identification of array indexes to the final allocation of transformed instructions to uniform memory.

This technique offers several significant benefits, including: (1) elimination of expensive global memory loads by replacing them with more efficient ALU operations; (2) conservation of general purpose registers (GPRs) that would otherwise be consumed by memory access operations; (3) applicability to complex data structures including multi-dimensional arrays and struct arrays; and (4) transformation that focuses only on dimensions with dynamic indexes, avoiding unnecessary expansion of static dimensions.

Hence, the invention is particularly valuable for modern graphics applications where uniform buffer objects are extensively used, especially in OpenGL ES and Vulkan shaders where arrays of structures with dynamic indexing are common. By optimizing these access patterns, the invention enables significant performance improvements in real-world shader programs without requiring developers to manually restructure their code to avoid dynamic indexing.

The terminology employed in the description of the various embodiments herein is intended for the purpose of describing particular embodiments and should not be construed as limiting. In the context of this description and the appended claims, the singular forms "a", "an", and "the" are intended to encompass plural forms as well, unless the context clearly indicates otherwise.

It should be understood that the term "and/or" as used herein is intended to encompass any and all possible combinations of one or more of the associated listed items. Furthermore, it should be noted that the terms "includes," "including," "comprises," and/or "comprising," when used in this specification, indicate the presence of stated features, integers, steps, operations, elements, and/or components, but do not exclude the presence or addition of one or more other features, integers, steps, operations, elements, components, and/or groups thereof.

In the context of this disclosure, the terms "coupled," "connected," "connecting," "electrically connected," and similar expressions are used interchangeably to broadly denote the state of being electrically or electronically connected. Furthermore, an entity is deemed to be in "communication" with another entity (or entities) when it electrically transmits and/or receives information signals to/from the other entity, irrespective of whether these signals contain image/voice information or data/control information, and regardless of the signal type (analog or digital). It is important to note that this communication can occur through either wired or wireless means. The use of these terms is intended to encompass all forms of electrical or electronic connectivity relevant to the described embodiments.

The use of ordinal designators like "first," "second," and so forth in the specification and claims serves to differentiate between multiple instances of similarly named elements. These designators do not imply any inherent sequence, priority, or chronological order in the manufacturing process or functional relationship between elements. Rather, they are employed solely as a means of uniquely identifying and distinguishing between separate instances of elements that share a common name or description.

The directional terms used in the embodiments such as up, down, left, right, upper-side, down-side, in front of or behind are just the directions referring to the attached figures. Thus, the direction terms used in the present disclosure are for illustration, and are not intended to limit the scope of the present disclosure. It should be noted that the elements which are specifically described or labeled may exist in various forms for those skilled in the art.

As may be used throughout this specification and the appended claims, terms of approximation and degree such as "substantially," "approximately," "generally," "essentially," "nearly," "about," and similar expressions are used to account for variations in precision, manufacturing tolerances, measurement accuracy, environmental conditions, and inherent material properties that may affect the described features or characteristics. Such variations may range from ±20% in broader applications to progressively tighter tolerances of ±10%, ±5%, ±3%, ±2%, ±1%, or ±0.5% in more precise implementations. The specific degree of variation encompassed by these terms of approximation in any given context is informed by the nature of the component, relationship, or parameter being described, the technical requirements of the particular embodiment, and the understanding of one skilled in the relevant art.

This interpretation of terminology is provided to ensure clarity and consistency throughout the specification and claims, and should not be construed as restricting the scope of the disclosed embodiments or the appended claims.

The various illustrative components, logic, logical blocks, modules, circuits, operations and algorithm processes described in connection with the embodiments disclosed herein may be implemented as electronic hardware, firmware, software, or combinations of hardware, firmware or software, including the structures disclosed in this specification and the structural equivalents thereof. The interchangeability of hardware, firmware and software has been described generally, in terms of functionality, and illustrated in the various illustrative components, blocks, modules, circuits and processes described above. Whether such functionality is implemented in hardware, firmware or software depends upon the particular application and design constraints imposed on the overall system.

The hardware and data processing apparatus utilized to implement the various illustrative components, logics, logical blocks, modules, and circuits described herein may comprise, without limitation, one or more of the following: a general-purpose single-chip or multi-chip processor, a digital signal processor (DSP), an application specific integrated circuit (ASIC), a field programmable gate array (FPGA), other programmable logic devices (PLDs), discrete gate or transistor logic, discrete hardware components, or any suitable combination thereof. Such hardware and apparatus shall be configured to perform the functions described herein.

A general-purpose processor may include, but is not limited to, a microprocessor, or alternatively, any conventional processor, controller, microcontroller, or state machine. In certain implementations, a processor may be realized as a combination of computing devices. Such combinations may include, for example, a DSP and a microprocessor, a plurality of microprocessors, one or more microprocessors in conjunction with a DSP core, or any other such configuration as may be suitable for the intended application.

It is to be understood that in some embodiments, particular processes, operations, or methods may be executed by circuitry specifically designed for a given function. Such function-specific circuitry may be optimized to enhance performance, efficiency, or other relevant metrics for the particular task at hand. The selection of specific hardware implementation shall be determined based on the particular requirements of the application, which may include, inter alia, performance specifications, power consumption constraints, cost considerations, and size limitations.

In certain aspects, the subject matter described herein may be implemented as software. Specifically, various functions of the disclosed components, or steps of the methods, operations, processes, or algorithms described herein, may be realized as one or more modules within one or more computer programs. These computer programs may comprise non-transitory processor-executable or computer-executable instructions, encoded on one or more tangible processor-readable or computer-readable storage media. Such instructions are configured for execution by, or to control the operation of, data processing apparatus, including the components of the devices described herein. The aforementioned storage media may include, but are not limited to, Random Access Memory (RAM), Read Only Memory (ROM), Electrically Erasable Programmable Read-Only Memory (EEPROM), Compact Disc Read-Only Memory (CD-ROM) or other optical disk storage, magnetic disk storage or other magnetic storage devices, or any other medium capable of storing program code in the form of instructions or data structures. It should be understood that combinations of the above-mentioned storage media are also contemplated within the scope of computer-readable storage media for the purposes of this disclosure.

Various modifications to the embodiments described in this disclosure may be readily apparent to persons having ordinary skill in the art, and the generic principles defined herein may be applied to other embodiments without departing from the spirit or scope of this disclosure. Thus, the claims are not intended to be limited to the embodiments shown herein, but are to be accorded the widest scope consistent with this disclosure, the principles and the novel features disclosed herein.

In certain implementations, the embodiments may comprise the disclosed features and may optionally include additional features not explicitly described herein. Conversely, alternative implementations may be characterized by the substantial or complete absence of non-disclosed elements. For the avoidance of doubt, it should be understood that in some embodiments, non-disclosed elements may be intentionally omitted, either partially or entirely, without departing from the scope of the invention. Such omissions of non-disclosed elements shall not be construed as limiting the breadth of the claimed subject matter, provided that the explicitly disclosed features are present in the embodiment.

Additionally, various features that are described in this specification in the context of separate embodiments also can be implemented in combination in a single implementation. Conversely, various features that are described in the context of a single implementation also can be implemented in multiple embodiments separately or in any suitable subcombination. As such, although features may be described above as acting in particular combinations, and even initially claimed as such, one or more features from a claimed combination can in some cases be excised from the combination, and the claimed combination may be directed to a subcombination or variation of a subcombination.

The depiction of operations in a particular sequence in the drawings should not be construed as a requirement for strict adherence to that order in practice, nor should it imply that all illustrated operations must be performed to achieve the desired results. The schematic flow diagrams may represent example processes, but it should be understood that additional, unillustrated operations may be incorporated at various points within the depicted sequence. Such additional operations may occur before, after, simultaneously with, or between any of the illustrated operations.

Additionally, it should be understood that the various figures and component diagrams presented and discussed within this document are provided for illustrative purposes only and are not drawn to scale. These visual representations are intended to facilitate understanding of the described embodiments and should not be construed as precise technical drawings or limiting the scope of the invention to the specific arrangements depicted.

In certain implementations, multitasking and parallel processing may prove advantageous. Furthermore, while various system components are described as separate entities in some embodiments, this separation should not be interpreted as mandatory for all embodiments. It is contemplated that the described program components and systems may be integrated into a single software package or distributed across multiple software packages, as dictated by the specific implementation requirements.

It should be noted that other embodiments, beyond those explicitly described, fall within the scope of the appended claims. The actions specified in the claims may, in some instances, be performed in an order different from that in which they are presented, while still achieving the desired outcomes. This flexibility in execution order is an inherent aspect of the claimed processes and should be considered within the scope of the invention.

## Claims

1. A method of transforming dynamic indexing to static indexing with scalarization, **characterized in that** the method comprises:
identifying a plurality of array indexes in a source code;
identifying a plurality of dynamically indexed instructions associated with the plurality of array indexes, wherein each dynamically indexed instruction loads from a uniform memory;
prioritizing the plurality of dynamically indexed instructions according to a priority list;
removing at least one duplicate instruction from the plurality of dynamically indexed instructions;
estimating an allocation size for the plurality of dynamically indexed instructions according to the priority list;
transforming a set of dynamically indexed instructions to a set of statically indexed instructions comprising static indexes without dynamic indexes; and
allocating the set of statically indexed instructions to the uniform memory.

2. The method of claim 1, wherein the priority list lists from high priority to low priority and comprises:
an instruction comprising a plurality of expensive memory loads;
an instruction comprising a plurality of high latency operations;
an instruction to be transformed from a dynamic index into several static indexes;
an instruction comprising a plurality of low latency operations; and
an instruction that is an immediate value.

3. The method of claim 1, further comprising:
estimating a pre-allocation size for the plurality of dynamically indexed instructions; and
deriving a budget size according to a size of the uniform memory and the pre-allocation size.

4. The method of claim 1, wherein transforming the set of dynamically indexed instructions comprises applying different transformation strategies based on the type of data structure being accessed, wherein the type of data structure comprises at least one selected from the group consisting of:
a single dimension scalar array;
a multi-dimension scalar array; and
a multi-dimension struct array.

5. The method of any one of the claims 1-4, wherein estimating the allocation size comprises:
performing a first allocation pass to calculate space requirements for high-priority candidate instructions;
determining a remaining budget for transformation based on the total uniform memory size and the calculated high-priority space requirements; and
performing a second allocation pass for all remaining qualified candidate instructions within the determined budget.

6. The method of any one of the claims 1-5, wherein the uniform memory comprises a constant register file configured to store preloaded uniform buffer values.

7. The method of any one of claims 1-6, wherein the at least one duplicate instruction points to a same object and/or value as another dynamically indexed instruction of the plurality of dynamically indexed instructions.

8. A method of transforming dynamic indexing to static indexing with scalarization, **characterized in that** the method comprises:
transforming a dynamically indexed instruction to a set of statically indexed instructions, wherein the dynamically indexed instruction loads from a uniform memory, the set of statically indexed instructions comprise static indexes without dynamic indexes;
allocating the set of statically indexed instructions to the uniform memory; and
when another dynamically indexed instruction is waiting to be transformed and the uniform memory has sufficient space for transformation of the another dynamically indexed instruction, transforming the another dynamically indexed instruction to another set of statically indexed instructions.

9. The method of claim 8, further comprising if the another dynamically indexed instruction has low priority and the uniform memory does not have sufficient space for transformation of the another dynamically indexed instruction, allocating the another dynamically indexed instruction to the uniform memory.

10. The method of claims 8 or 9, wherein transforming the dynamically indexed instruction to the set of statically indexed instructions comprises:
generating an initial value for a destination register;
generating a plurality of conditional selection instructions, wherein each conditional selection instruction compares an index value with a specific constant and selectively loads a corresponding preloaded value based on the comparison result; and
arranging the plurality of conditional selection instructions in a sequence to evaluate all possible index values within a domain of the dynamic index.

11. The method of any one of claims 8-10, further comprising:
identifying an array index in a source code; and
identifying the dynamically indexed instruction associated with the array index.

12. The method of any one of claims 8-11, further comprising if the another dynamically indexed instruction is a duplicate instruction that points to a same object and/or value as the dynamically indexed instruction, removing the another dynamically indexed instruction.

13. A device for transforming dynamic indexing to static indexing with scalarization, **characterized in that** the device comprises:
a memory; and
a processor coupled to the memory, configured to:
identify a plurality of array indexes in a source code;
identify a plurality of dynamically indexed instructions associated with the plurality of array indexes, wherein each dynamically indexed instruction loads from a uniform memory;
prioritize the plurality of dynamically indexed instructions according to a priority list;
remove at least one duplicate instruction from the plurality of dynamically indexed instructions;
estimate an allocation size for the plurality of dynamically indexed instructions according to the priority list;
transform a set of dynamically indexed instructions to a set of statically indexed instructions comprising static indexes without dynamic indexes; and
allocate the set of statically indexed instructions to the uniform memory.

14. A device for transforming dynamic indexing to static indexing with scalarization, **characterized in that** the device comprises:
a memory; and
a processor coupled to the memory, configured to:
transform a dynamically indexed instruction to a set of statically indexed instructions, wherein the dynamically indexed instruction loads from a uniform memory, the set of statically indexed instructions comprise static indexes without dynamic indexes;
allocate the set of statically indexed instructions to the uniform memory; and
when another dynamically indexed instruction is waiting to be transformed and the uniform memory has sufficient space for transformation of the another dynamically indexed instruction, transform the another dynamically indexed instruction to another set of statically indexed instructions.

15. The device of claims 13 or 14, wherein the processor is further configured to prioritize the plurality of dynamically indexed instructions according to a priority list comprising, from high priority to low priority:
instructions comprising a plurality of expensive memory loads;
instructions comprising a plurality of high latency operations;
instructions to be transformed from a dynamic index into several static indexes;
instructions comprising a plurality of low latency operations; and
instructions that are immediate values.
